# EUROPEAN PATENT APPLICATION

(11) **EP 4 631 629 A1**
(43) Date of publication of application: **15.10.2025**
(21) Application number: 24169596.4
(22) Date of filing: 11.04.2024
(51) Int. Cl.: B05C 3/09, B05C 13/02, G02B 1/11, B29D 11/00

(54) **RING FOR COATING AN OPTICAL ARTICLE**

(71) Applicant: Essilor International, 94220 Charenton-Le-Pont (FR)
(72) Inventor: ROSAS ESPINO, Manuel Alejandro, 31114 CHIHUAHUA (MX); MARTINEZ DEL ROSAL, Regina, 31114 CHIHUAHUA (MX)
(74) Representative: Plasseraud IP

(57) **Abstract**

A ring (2) for coating an optical article, the ring (2) comprising a lower ring portion (4), an upper ring portion (8), which has an angular extension lower than 180° and is vertically aligned with the lower ring portion (4), and a middle portion (6) placed between the lower ring portion (4) and the upper ring portion (8);
wherein the lower ring portion (4) and the upper ring portion (8) have respective internal inclined sides (32, 36) arranged to hold the optical article, and
wherein the middle ring portion (6) forms a projection (44) protruding radially outwards with respect to the lower ring portion (4) and the upper ring portion (8), so that the ring (2) is connectable to a coating machine via said projection (44).

## Description

### Technical field

This invention relates to an equipment for use in a coating process of an optical article, for example in an AR (anti-reflective) coating process of a lens.

This invention relates to a ring for coating an optical article, to be used in a coating machine during the loading, coating and unloading phases of a coating process.

### Background information and prior art

Rings to secure lenses of various shapes and geometries during a coating process, such as an AR coating process, are known. These durable rings prevent lenses from falling out of the sector or segment of a coating machine, into the body of the coating machine itself, thus eliminating breakages of the lenses.

Such rings are typically made up of a metal material, for example a stainless steel material, and are single sided.

Single sided rings have only one side (one flap) that fits into the sector of a coating machine, therefore, it is necessary to manually flip the lens itself into the ring in order to coat both sides of the lens.

Single sided rings require therefore manual lens manipulation during use, which consequently increases the risk of falling lenses or cosmetic damages of the lens.

Accordingly, there is the need to provide an innovative ring for coating an optical article which reduces the amount of lens manipulation required during a coating process.

### Summary

What is provided herein is a ring for coating an optical article, the ring comprising a lower ring portion, an upper ring portion, which has an angular extension lower than 180° and is vertically aligned with the lower ring portion, and a middle portion placed between the lower ring portion and the upper ring portion ;
wherein the lower ring portion and the upper ring portion have respective internal inclined sides arranged to hold the optical article, and
wherein the middle ring portion forms a projection protruding radially outwards with respect to the lower ring portion and the upper ring portion, so that the ring is connectable to a coating machine via said projection.

The proposed ring provides a double-sided configuration which alleviates the need to manually remove the lens during flipping and reduces lens handling.

With the design of the ring, an operator no longer removes the lens from the ring to flip the lens from a concave side to a convex side before coating it.

In an embodiment, the upper ring portion comprises an external upper vertical side, the lower ring portion comprises an external lower vertical side vertically aligned with the external upper vertical side and the middle portion comprises an external middle vertical side parallel to the external upper vertical side and the external lower vertical side and extending radially outwardly with respect to said external upper vertical side and lower vertical side.

In an embodiment, the external upper vertical side, the external lower vertical side and the external middle vertical side are connected to each other through an upper horizontal side and a lower horizontal side, respectively.

In an embodiment, the upper ring portion comprises an inner upper vertical side (28), the middle ring portion comprises an inner middle vertical side parallel to the inner upper vertical side and placed radially outwards with respect to the inner upper vertical side, and the lower ring portion comprises an inner lower vertical side parallel to the inner upper vertical side and to the inner middle vertical side and placed radially inwards with respect to the upper vertical side.

In an embodiment, the inner upper vertical side and the inner middle vertical side are connected each other through a first inclined side.

In an embodiment, the height of the first inclined side is equal to 3.75mm.

In an embodiment, the inner lower vertical side and the inner middle vertical side are connected each other through a second inclined side and an horizontal side.

In an embodiment, the height of the second inclined side is equal to 3.5mm.

In an embodiment, the distance between the inner lower vertical side and an axis of the ring ranges from 31mm and 38mm.

In an embodiment, the distance between the inner middle vertical side and the axis of the ring ranges from 33mm and 40,5mm.

In an embodiment, the external upper vertical side and the inner upper vertical side are connected each other through a top horizontal side and the external lower vertical side and the inner lower vertical side are connected each other through a bottom horizontal side.

In an embodiment, the upper ring portion has an angular extension ranging from 152.31° to 157.27°.

In an embodiment, the optical article comprises a lens.

### Description of the drawings

Further characteristics and advantages of the present invention will become apparent from the following description, provided merely by way of a non-limiting example, with reference to the attached drawings, in which:
Figure 1 shows a perspective top view of a ring according to an embodiment of the present invention;
Figure 2 shows a plan view of the ring of Figure 1;
Figure 3 shows a section view of the ring through a section plane indicated III-III in Figure 2; and
Figure 4 shows a perspective bottom view of the ring of Figure 1.

### Detailed description of embodiments

In the description which follows, the drawing figures are not necessarily to scale, and certain features may be shown in generalized or schematic form in the interest of clarity and conciseness or for informational purposes. Embodiments discussed herein are merely representative and do not limit the scope of the invention. It will also be obvious to one skilled in the art that all the technical features that are defined relative to a process can be transposed, individually or in combination, to a device and conversely, all the technical features relative to a device can be transposed, individually or in combination, to a process. To avoid unnecessary details for practicing the invention, the description may omit certain information already known to those skilled in the art.

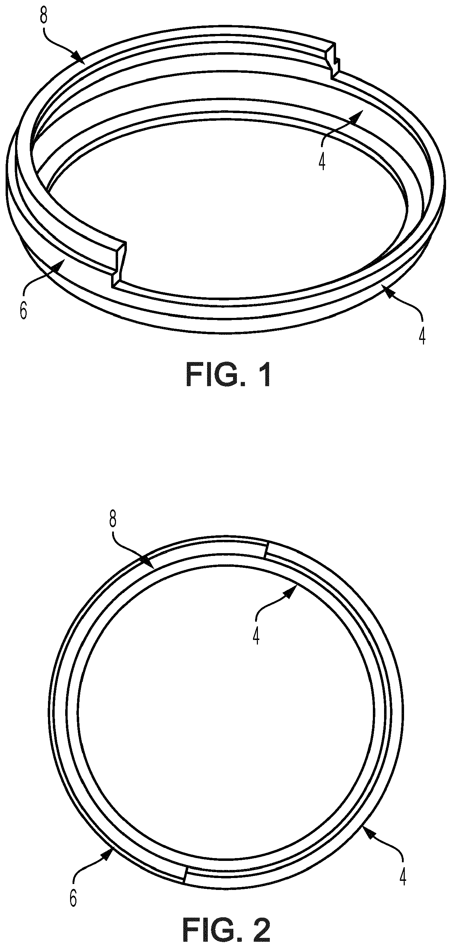

Figure 1 shows a perspective top view of a ring 2 according to an embodiment of the present invention. The ring 2 is arranged to host an optical article such a lens, not shown in the figures.

The ring 2 comprises a lower ring portion 4, a middle ring portion 6 and an upper ring portion 8.

Advantageously, the upper ring portion 8 has an angular extension ranging from 152.31° to 157.27°.

Figure 2 shows a plan view of the ring 2.

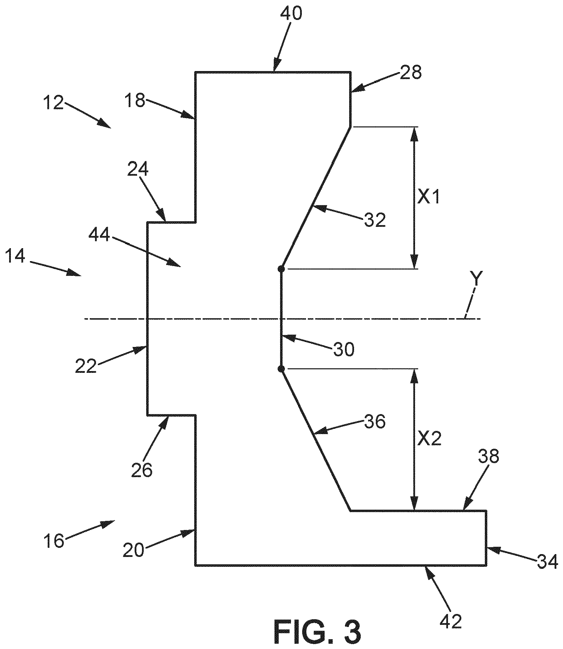

Figure 3 shows a section view of the ring 2 through a section plane indicated III-III in Figure 2.

As shown in Figure 3, the ring 2 has a cross-section (i.e., a section through a plane passing through the axis of the ring 2) with a substantially C-like configuration having an upper portion 12 corresponding to the upper ring portion 8, a middle portion 14 corresponding to the middle ring portion 6 and a lower portion 16 corresponding to the lower ring portion 4.

The portions 12, 14 and 16 are configured so that the C-like cross-section of the ring 2 has a radially outer profile and a radially inner profile defined as follows.

The radially outer profile has an external upper vertical side 18 (i.e., a side extending parallel to the axis of the ring 2), an external lower vertical side 20 vertically aligned with the external upper vertical side 18 (i.e., lying on the same vertical straight line as the external upper vertical side 18), and an external middle vertical side 22 parallel to the external upper and lower vertical sides 18 and 20 and extending radially outwardly with respect to the external upper and lower vertical sides 18 and 20 (i.e., at a greater distance from the axis of the ring 2 than the external upper and lower vertical sides 18 and 20).

The external upper and lower vertical sides 18, 20 and the external middle vertical side 22 are connected to each other through an upper horizontal side 24 (a side extending perpendicular to the external vertical sides 18, 20 and 22) and a lower horizontal side 26, respectively.

The external upper vertical side 18 is placed in correspondence of the upper ring portion 8, the external middle vertical side 22 is placed in correspondence of the middle ring portion 6 and the external lower vertical side 20 is placed in correspondence of the lower ring portion 4.

The radially inner profile has an inner upper vertical side 28 and an inner middle vertical side 30 parallel to each other. The inner middle vertical side 30 is placed radially outwards with respect to the inner upper vertical side 28. The inner upper vertical side 28 and the inner middle vertical side 30 are connected each other through a first inclined side 32.

The height x1 of the first inclined side 32 (i.e., the distance between an upper end and a lower end of the first inclined side 32) is preferably equal to 3.75mm.

The radially inner profile further comprises an inner lower vertical side 34 parallel to the inner upper vertical side 28 and to the inner middle vertical side 30. The inner lower vertical side 34 is placed radially inwards with respect to the inner upper vertical side 28. The inner lower vertical side 34 and the inner middle vertical side 30 are connected each other through a second inclined side 36 and an horizontal side 38.

The height x2 of the second inclined side 36 (i.e., the distance between an upper end and a lower end of the second inclined side 36) is preferably equal to 3.5mm.

The inner upper vertical side 28 and the first inclined side 32 are placed in correspondence of the upper ring portion 8, the inner middle vertical side 22 is placed in correspondence of the middle ring portion 6, the inner lower vertical side 34 and the second inclined side 36 are placed in correspondence of the lower ring portion 4.

The distance between the inner lower vertical side 34 and the axis of the ring 2 preferably ranges from 31 mm and 38mm, therefore, the inner diameter of the lower ring portion 4 ranges from 62mm to 76mm.

The distance between the inner middle vertical side 30 and the axis of the ring 2 preferably ranges from 33mm and 40,5mm, therefore, the inner diameter of the middle ring portion 6 ranges from 66mm to 81mm.

The radially outer profile and the radially inner profile are connected each other through a top horizontal side 40 and a bottom horizontal side 42, respectively.

The ring 2 is arranged to hold a lens between the first and second inclined sides 32, 36 and to be connected to a coating machine via a projection 44 formed by the middle ring portion 6, protruding radially outwards with respect to the lower ring portion 4 and the upper ring portion 8 and being defined by the upper horizontal side 24, the external middle vertical side 22 and the external lower horizontal side 26 of the radially outer profile.

The ring 2 can be rotated around a rotational axis Y perpendicular to the middle vertical side 22 of the radially outer profile, so that the lens is flipped, to be coated on both sides, without the need of being removed from the ring 2.

The ring 2 allows reducing the overall turning time of lenses into a coating machine because it is sufficient to turn the ring 2 itself, with the lens mounted in and hold by the first and second inclined sides 32 and 36, and not to turn the lens into the ring 2. This allows the operator to work with more lenses per work hour, thus, improving productivity, quality, efficiency and sustainability of a coating process.

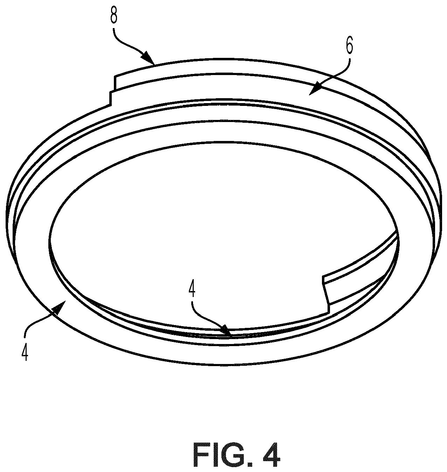

Figure 4 is a perspective bottom view of the ring 2 showing in detail a bottom view of the lower ring portion 4.

Clearly, the principle of the invention remaining the same, the embodiments and details of production can be varied considerably from what has been described and illustrated purely by way of non-limiting example, without departing from the scope of protection of the present as defined in the attached claims.

## Claims

1. A ring (2) for coating an optical article, the ring (2) comprising a lower ring portion (4), an upper ring portion (8), which has an angular extension lower than 180° and is vertically aligned with the lower ring portion (4), and a middle portion (6) placed between the lower ring portion (4) and the upper ring portion (8);
wherein the lower ring portion (4) and the upper ring portion (8) have respective internal inclined sides (32, 36) arranged to hold the optical article, and
wherein the middle ring portion (6) forms a projection (44) protruding radially outwards with respect to the lower ring portion (4) and the upper ring portion (8), so that the ring (2) is connectable to a coating machine via said projection (44).

2. The ring (2) of claim 1, wherein
the upper ring portion (8) comprises an external upper vertical side (18);
the lower ring portion (4) comprises an external lower vertical side (20) vertically aligned with the external upper vertical side (18); and
the middle portion (6) comprises an external middle vertical side (22) parallel to the external upper vertical side (18) and the external lower vertical side (20) and extending radially outwardly with respect to said external upper vertical side (18) and lower vertical side (20).

3. The ring (2) of claim 2, wherein the external upper vertical side (18), the external lower vertical side (20) and the external middle vertical side (22) are connected to each other through an upper horizontal side (24) and a lower horizontal side (26), respectively.

4. The ring (2) of any of the above claims, wherein
the upper ring portion (8) comprises an inner upper vertical side (28);
the middle ring portion (6) comprises an inner middle vertical side (30) parallel to the inner upper vertical side (28) and placed radially outwards with respect to the inner upper vertical side (28); and
the lower ring portion (4) comprises an inner lower vertical side (34) parallel to the inner upper vertical side (28) and to the inner middle vertical side (30) and placed radially inwards with respect to the upper vertical side (28).

5. The ring (2) of claim 4, wherein the inner upper vertical side (28) and the inner middle vertical side (30) are connected each other through a first inclined side (32).

6. The ring (2) of claim 5, wherein the height (x1) of the first inclined side (32) is equal to 3.75mm.

7. The ring (2) of any of the claims 4 to 6, wherein the inner lower vertical side (34) and the inner middle vertical side (30) are connected each other through a second inclined side (36) and an horizontal side (38).

8. The ring (2) of the claim 7, wherein the height (x2) of the second inclined side (36) is equal to 3.5mm.

9. The ring (2) of any of the claims 4 to 8, wherein the distance between the inner lower vertical side (34) and an axis of the ring (2) ranges from 31mm and 38mm.

10. The ring (2) of claim 9, wherein the distance between the inner middle vertical side (30) and the axis of the ring (2) ranges from 33mm and 40,5mm.

11. The ring (2) of any claims 2 and 4, wherein the external upper vertical side (18) and the inner upper vertical side (28) are connected each other through a top horizontal side (40) and the external lower vertical side (20) and the inner lower vertical side (34) are connected each other through a bottom horizontal side (42).

12. The ring (2) of any of the above claims, wherein the upper ring portion (8) has an angular extension ranging from 152.31° to 157.27°.

13. The ring (2) of any of the above claims, wherein the optical article comprises a lens.
